# EUROPEAN PATENT APPLICATION

(11) **EP 4 250 851 A1**
(43) Date of publication of application: **27.09.2023**
(21) Application number: 21911562.3
(22) Date of filing: 23.12.2021
(51) Int. Cl.: H04W 72/12, H04W 76/27, H04W 28/02, H04W 88/08

(54) **METHOD AND APPARATUS FOR SUPPORTING SMALL DATA TRANSMISSION IN WIRELESS COMMUNICATION SYSTEM**

(30) Priority: 23.12.2020 KR 20200181759; 18.10.2021 KR 20210138421
(71) Applicant: Samsung Electronics Co., Ltd., Suwon-si, Gyeonggi-do 16677 (KR)
(72) Inventor: OCK, Jinwoo, Suwon-si, Gyeonggi-do 16677 (KR); BAE, Beomsik, Suwon-si, Gyeonggi-do 16677 (KR)
(74) Representative: Nederlandsch Octrooibureau
(86) International application number: PCT/KR2021/019671
(87) International publication number: WO 2022/139496

(57) **Abstract**

The present disclosure relates to a communication method and system for converging a 5th-Generation (5G) communication system for supporting higher data rates beyond a 4th-Generation (4G) system with a technology for Internet of Things (IoT). The present disclosure may be applied to intelligent services based on the 5G communication technology and the IoT-related technology, such as smart home, smart building, smart city, smart car, connected car, health care, digital education, smart retail, security and safety services. A method for a base station of a wireless communication system is provided. The method comprises the steps of: receiving, from a user equipment in an inactive mode (INACTIVE) to a distributed unit (DU) of the base station, a radio resource control (RRC) message including uplink data; transmitting from, the DU to a centralized unit-control plane (CU-CP) of the base station, a first message including at least one of indicator information related to transmission of the uplink data and identifier information of a data radio bearer (DRB) corresponding to the uplink data; and transmitting the uplink data to a user plane function (UPF), on the basis of the first message.

## Description

### [Technical Field]

The disclosure relates to a wireless communication system and, more particularly, to a method and an apparatus for supporting small data transmission in a wireless communication system.

### [Background Art]

To meet the demand for wireless data traffic having increased since deployment of 4G communication systems, efforts have been made to develop an improved 5G or pre-5G communication system. Therefore, the 5G or pre-5G communication system is also called a `Beyond 4G Network' or a 'Post LTE System'. The 5G communication system is considered to be implemented in higher frequency (mmWave) bands, e.g., 60GHz bands, so as to accomplish higher data rates. To decrease propagation loss of the radio waves and increase the transmission distance, the beamforming, massive multiple-input multiple-output (MIMO), Full Dimensional MIMO (FD-MIMO), array antenna, an analog beam forming, large scale antenna techniques are discussed in 5G communication systems. In addition, in 5G communication systems, development for system network improvement is under way based on advanced small cells, cloud Radio Access Networks (RANs), ultra-dense networks, device-to-device (D2D) communication, wireless backhaul, moving network, cooperative communication, Coordinated Multi-Points (CoMP), reception-end interference cancellation and the like. In the 5G system, Hybrid FSK and QAM Modulation (FQAM) and sliding window superposition coding (SWSC) as an advanced coding modulation (ACM), and filter bank multi carrier (FBMC), non-orthogonal multiple access(NOMA), and sparse code multiple access (SCMA) as an advanced access technology have been developed.

The Internet, which is a human centered connectivity network where humans generate and consume information, is now evolving to the Internet of Things (IoT) where distributed entities, such as things, exchange and process information without human intervention. The Internet of Everything (IoE), which is a combination of the IoT technology and the Big Data processing technology through connection with a cloud server, has emerged. As technology elements, such as "sensing technology", "wired/wireless communication and network infrastructure", "service interface technology", and "Security technology" have been demanded for IoT implementation, a sensor network, a Machine-to-Machine (M2M) communication, Machine Type Communication (MTC), and so forth have been recently researched. Such an IoT environment may provide intelligent Internet technology services that create a new value to human life by collecting and analyzing data generated among connected things. IoT may be applied to a variety of fields including smart home, smart building, smart city, smart car or connected cars, smart grid, health care, smart appliances and advanced medical services through convergence and combination between existing Information Technology (IT) and various industrial applications.

In line with this, various attempts have been made to apply 5G communication systems to IoT networks. For example, technologies such as a sensor network, Machine Type Communication (MTC), and Machine-to-Machine (M2M) communication may be implemented by beamforming, MIMO, and array antennas. Application of a cloud Radio Access Network (RAN) as the above-described Big Data processing technology may also be considered to be as an example of convergence between the 5G technology and the IoT technology.

According to the recent development of a 5G communication system, a method of more efficiently transmitting and receiving relatively small data is needed. Particularly, a method of minimizing unnecessary delay in small data transmission and reception between a split base station (split gNB) and a UE in the 5G communication system has emerged.

### [Disclosure of Invention]

### [Technical Problem]

According to a general data transmission and reception method, a UE in an active mode is required to switch to a connected mode in order to transmit and receive data to and from a base station (BS). Accordingly, even when the UE in the inactive mode transmits and receives relatively small data, the UE should switch to the connected mode every time, and thus unnecessary delay may be generated due to a signaling procedure for transition between radio access states.

### [Solution to Problem]

According to an embodiment of the disclosure to solve the above problems, a method of a base station (BS) in a wireless communication system includes receiving a radio resource control (RRC) message including uplink data from a user equipment (UE) in an inactive mode by a distributed unit (DU) of the BS, transferring a first message including at least one piece of indicator information related to transmission of the uplink data and an identification information of a data radio bearer (DRB) corresponding to the uplink data to a centralized unit-control plane (CU-CP) of the BS by the DU, and transmitting the uplink data to a user plane function (UPF), based on the first message.

According to another embodiment of the disclosure to solve the above problems, a base station (BS) in a wireless communication system includes a transceiver, and a controller configured to control the transceiver to receive a radio resource control (RRC) message including uplink data from a user equipment (UE) in an inactive mode by a distributed unit (DU) of the BS, transfer a first message including at least one piece of indicator information related to transmission of the uplink data and an identification information of a data radio bearer (DRB) corresponding to the uplink data to a centralized unit-control plane (CU-CP) of the BS by the DU, and transmit the uplink data to a user plane function (UPF), based on the first message.

### [Advantageous Effects of Invention]

According to an embodiment of the disclosure, a UE in an inactive mode can transmit and receive relatively small data to and from an aggregated base station (aggregated gNB) or a split base station (split gNB) without switching to a connected mode. Accordingly, unnecessary delay that may be generated by transmission or reception of small data can be resolved.

### [Brief Description of Drawings]

FIG. 1 illustrates an example of a structure of a next-generation mobile communication system.
FIG. 2 illustrates a radio protocol structure of the next-generation mobile communication system.
FIG. 3 illustrates transition of a radio access state in a next-generation mobile communication system according to an embodiment of the disclosure.
FIG. 4 is a sequence diagram illustrating a process in which a UE accessing a split base station (split gNB) switches to an inactive radio access state in a next-generation mobile communication system according to an embodiment of the disclosure.
FIG. 5 illustrates a method of transmitting small data (SD) transmitted by an inactive mode UE to a user plane and a structure of a split base station (split gNB) and a tunnel configuration for supporting the method according to a first embodiment of the disclosure.
FIG. 6 is a sequence diagram illustrating the operation between the UE and the split base station (split gNB) or inside the split base station (split gNB) according to the first embodiment of the disclosure.
FIG. 7 illustrates messages and information elements (IEs) according to the first embodiment of the disclosure.
FIG. 8 illustrates a method of transmitting small data (SD) transmitted by an inactive mode UE to a user plane and a structure of a split base station (split gNB) for supporting the method according to a second embodiment of the disclosure.
FIG. 9A is a sequence diagram illustrating the operation between the UE and the split base station (split gNB) or inside the split base station (split gNB) according to a second embodiment of the disclosure.
FIG. 9B is a sequence diagram illustrating the operation between the UE and the split base station (split gNB) or inside the split base station (split gNB) according the second embodiment of the disclosure.
FIG. 10A illustrates messages and information elements (IEs) according to the second embodiment of the disclosure.
FIG. 10B illustrates messages and information elements (IEs) according to the second embodiment of the disclosure.
FIG. 10C illustrates messages and information elements (IEs) according to the second embodiment of the disclosure.
FIG. 10D illustrates messages and information elements (IEs) according to the second embodiment of the disclosure.
FIG. 11 illustrates a method of transmitting small data (SD) transmitted by an inactive mode UE to a user plane and a structure of a split base station (split gNB) for supporting the method according to a third embodiment of the disclosure.
FIG. 12 is a sequence diagram illustrating the operation between the UE and the split base station (split gNB) or inside the split base station (split gNB) according to the third embodiment of the disclosure.
FIG. 13 illustrates a structure of a UE according to an embodiment of the disclosure.
FIG. 14 illustrates a structure of a BS according to an embodiment of the disclosure.

### [Mode for the Invention]

Hereinafter, embodiments of the disclosure will be described in detail with reference to the accompanying drawings.

In describing embodiments of the disclosure, descriptions related to technical contents well-known in the art and not associated directly with the disclosure will be omitted. Such an omission of unnecessary descriptions is intended to prevent obscuring of the main idea of the disclosure and more clearly transfer the main idea.

For the same reason, in the accompanying drawings, some elements may be exaggerated, omitted, or schematically illustrated. Further, the size of each element does not completely reflect the actual size. In the drawings, identical or corresponding elements are provided with identical reference numerals.

The advantages and features of the disclosure and ways to achieve them will be apparent by making reference to embodiments as described below in detail in conjunction with the accompanying drawings. However, the disclosure is not limited to the embodiments set forth below, but may be implemented in various different forms. The following embodiments are provided only to completely disclose the disclosure and inform those skilled in the art of the scope of the disclosure, and the disclosure is defined only by the scope of the appended claims. Throughout the specification, the same or like reference numerals designate the same or like elements.

Herein, it will be understood that each block of the flowchart illustrations, and combinations of blocks in the flowchart illustrations, can be implemented by computer program instructions. These computer program instructions can be provided to a processor of a general-purpose computer, special purpose computer, or other programmable data processing apparatus to produce a machine, such that the instructions, which execute via the processor of the computer or other programmable data processing apparatus, create means for implementing the functions specified in the flowchart block or blocks. These computer program instructions may also be stored in a computer usable or computer-readable memory that can direct a computer or other programmable data processing apparatus to function in a particular manner, such that the instructions stored in the computer usable or computer-readable memory produce an article of manufacture including instruction means that implement the function specified in the flowchart block or blocks. The computer program instructions may also be loaded onto a computer or other programmable data processing apparatus to cause a series of operational steps to be performed on the computer or other programmable apparatus to produce a computer implemented process such that the instructions that execute on the computer or other programmable apparatus provide steps for implementing the functions specified in the flowchart block or blocks.

Furthermore, each block of the flowchart illustrations may represent a module, segment, or portion of code, which includes one or more executable instructions for implementing the specified logical function(s). It should also be noted that in some alternative implementations, the functions noted in the blocks may occur out of the order. For example, two blocks shown in succession may in fact be executed substantially concurrently or the blocks may sometimes be executed in the reverse order, depending upon the functionality involved.

In the following description, terms for identifying access nodes, terms referring to network entities, terms referring to messages, terms referring to interfaces between network entities, terms referring to various identification information, and the like are illustratively used for the sake of convenience. Therefore, the disclosure is not limited by the terms as used below, and other terms referring to subjects having equivalent technical meanings may be used.

For the convenience of description, the disclosure will be described below using terms and names defined in the standards for 5G or NR and LTE systems. However, the disclosure is not limited by these terms and names, and may be applied in the same way to systems that conform other standards.

That is, the following detailed description of embodiments of the disclosure will be mainly directed to the communication standards defined by 3GPP. However, based on determinations by those skilled in the art, the main idea of the disclosure may also be applied to other communication systems having similar technical backgrounds through some modifications without significantly departing from the scope of the disclosure.

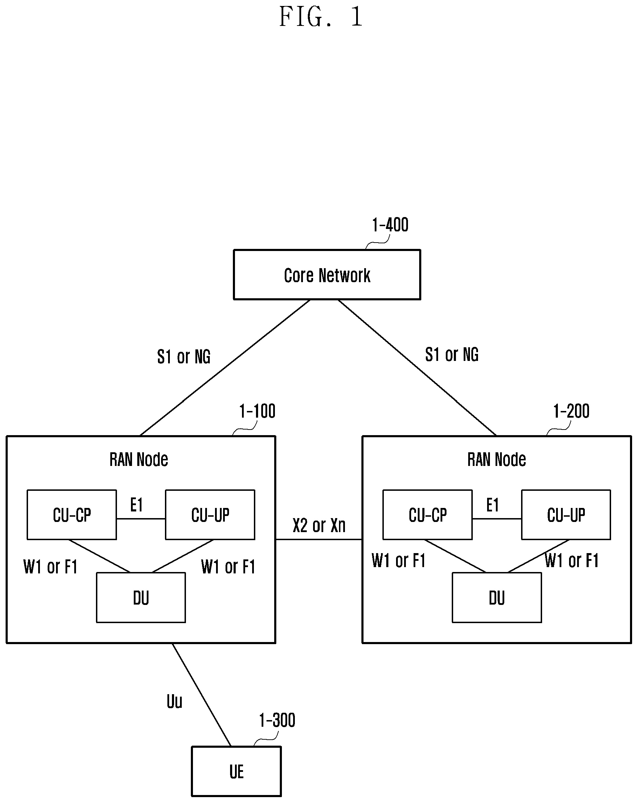

FIG. 1 illustrates an example of a next-generation mobile communication system structure. That is, FIG. 1 illustrates an example of a next-generation mobile communication system structure to which embodiments of the disclosure can be applied.

Referring to FIG. 1, radio access network (RAN) nodes 1-100 and 1-200 of the structure may be mobile communication base stations (BSs) such as LTE evolved Node Bs (eNodeBs) or next generation node Bs (NR gNBs) connected to a mobile communication core network (CN) like an evolved packet core (EPC) or a 5G core network (5GC) 1-400. Further, the RAN Nodes 1-100 and 1-200 may be divided into a centralized unit (CU) and a distributed unit (DU), and the CU may be divided into a CU-control plane (CP) and a CU-user plane (UP).

According to an embodiment, one RAN Node may include one or more CU-CPs, one or more CU-Ups, and one or more DUs. Further, CU-CPs, CU-UPs, and DUs included in one RAN Node may be configured together. For example, one RAN Node may include a CU in which a CU-CP and a CU-UP are configured together and a DU. In another example, a CU-CP and a DU may be configured together in one RAN Node, and a CU-UP may be separately configured therein. In another example, one RAN node may be configured in the form of an aggregated base station (aggregated gNB) in which a CU-CP, a CU-UP, and a DU are configured together. One RAN Node may be configured by another combination as well as the above-described examples.

According to an embodiment, the CU and the DU may separately support BS functions. For example, the CU may support RRC/PDCP layers, and the DU may support RLC/MAC/PHY/RF layers. Further, the CU and the DU may be connected through an interface between functions inside the BS, such as a W1 or F1 interface.

According to an embodiment, the CU may be divided in to a CU-CP and a CU-CP. For example, the CU-CP may support the RRC/PDCU (for RRC) layers, the CU-UP may support the PDCP (for user data transmission) layer, and the CU-CP and the CU-UP may be connected through an interface between functions inside the BS, such as an E1 interface.

According to an embodiment, BSs may be configured in an aggregated structure or a split structure, and connections between aggregated base stations (aggregated gNBs), between split base stations (split gNBs), and between an aggregated base station (aggregated gNB) and a split base station (split gNB) may be possible. RAN Nodes may be connected through an inter-BS interface such as an X2 or Xn interface. Further, the RAN Node and the core network may be connected through an interface between the BS and the core network such as an S 1 or NG interface. The method proposed in the disclosure may be applied to the case in which the UE 1-300 is connected to the RAN Node in the state in which the inactive (RRC_INACTIVE) radio access state is maintained and transmits small data regardless of an aggregated base station (aggregated gNB) or a split base station (split gNB).

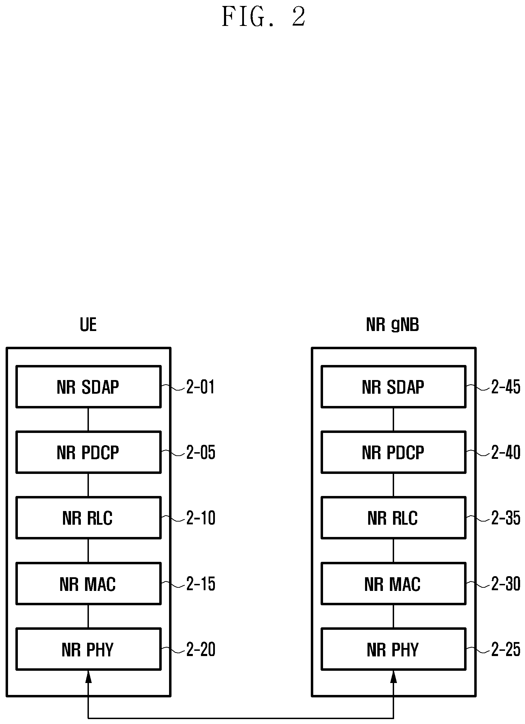

FIG. 2 illustrates a radio protocol structure in a next-generation mobile communication system. That is, FIG. 2 illustrates a radio protocol structure of a next-generation mobile communication system to which embodiments of the disclosure can be applied.

Referring to FIG. 2, the radio protocol of the next-generation communication system may include service data adaptation protocols (SDAPs) 2-01 and 2-45, NR PDCPs 2-05 and 2-40, NR RLCs 2-10 and 2-35, NR MACs 2-15 and 2-30, and NR PHYs 2-20 and 2-25 in the UE and the NR BS (for example, NR gNB).

Main functions of the NR SDAPs 2-01 and 2-45 may include some of the following functions.
- User data transmission function (transfer of user-plane data)
- Function of mapping QoS flow and a data bearer for uplink and downlink (mapping between a QoS flow and a DRB for both DL and UL)
- Function of marking a QoS flow ID for uplink and downlink (marking QoS flow ID in both DL and UL packets)
- Function of mapping reflective QoS flow to a data bearer for uplink SDAP PDUs (reflective QoS flow to DRB mapping for the UL SDAP PDUs)

For the SDAP layer (or an SDAP layer device), the UE may receive a configuration indicating whether to use the header of the SDAP layer device or the function of the SDAP layer device for each PDCP layer device, each bearer, or each logical channel through a radio resource control (RRC) message. When the SDAP header is configured, the UE may indicate an update or a reconfiguration of mapping information for uplink and downlink QoS flow and the data bearer through a non-access stratum (NAS) quality of service (QoS) reflective configuration 1-bit indicator (NAS reflective QoS) and an access stratum (AS) QoS reflective configuration 1-bit indicator (AS reflective QoS) of the SDAP header. The SDAP header may include QoS flow ID information indicating the QoS. The QoS information may be used as a data processing priority and scheduling information for smoothly supporting the service.

Main functions of the NR PDCP 2- 05 and 2-40 may include some of the following functions.
- Header compression and decompression function ((Header compression and decompression: ROHC only)
- User data transmission function (Transfer of user data)
- Sequential delivery function (In-sequence delivery of upper layer PDUs)
- Non-sequential delivery function (Out-of-sequence delivery of upper layer PDUs)
- Reordering function (PDCP PDU reordering for reception)
- Duplicate detection function (Duplicate detection of lower layer SDUs)
- Retransmission function (Retransmission of PDCP SDUs)
- Ciphering and deciphering function (Ciphering and deciphering)
- Timer-based SDU removal function (Timer-based SDU discard in uplink)

In the above examples, the reordering function of the NR PDCP device is a function of sequentially reordering PDCP PDUs received by a lower layer on the basis of a PDCP sequence number (SN). Reordering function of the NR PDCP layer may include a function of sequentially transferring the reordered data to a higher layer. Alternatively, the recording function of the NR PDCP may include a function of directly transmitting data regardless of the sequence. Further, the recording function of the NR PDCP may include a function of reordering the sequence and recording lost PDCP PDUs, a function of transmitting a status report on the lost PDCP PDUs to the transmitting side, and a function of making a request for retransmitting the lost PDCP PDUs.

Main functions of the NR RLCs 2-10 and 2-35 may include some of the following functions.
- Data transmission function (Transfer of upper layer PDUs)
- Sequential delivery function (In-sequence delivery of upper layer PDUs)
- Non-sequential delivery function (Out-of-sequence delivery of upper layer PDUs)
- ARQ function (Error correction through ARQ)
- Concatenation, segmentation, and reassembly function (Concatenation, segmentation, and reassembly of RLC SDUs)
- Re-segmentation function (Re-segmentation of RLC data PDUs)
- Reordering function (Reordering of RLC data PDUs)
- Duplicate detection function (Duplicate detection)
- Error detection function (Protocol error detection)
- RLC SDU deletion function (RLC SDU discard)
- RLC re-establishment function (RLC re-establishment)

In the above description, the sequential delivery function (in-sequence delivery) of the NR RLC device may be a function of sequentially transferring RLC SDUs received from a lower layer to a higher layer. When one RLC SDU is divided into a plurality of RLC SDUs and received, the sequential delivery function (in-sequence delivery) of the NR RLC device may include a function of reassembling and then transmitting the RLC SDUs.

The sequential delivery function (in-sequence delivery) of the NR RLC device may include a function of reordering the received RLC PDUs on the basis of an RLC sequence number (SN) or a PDCP sequence number (SN). Further, the sequential delivery function of the NR RLC device may include a function of recording the sequence and recording the lost RLC PDUs. In addition, the sequential delivery function of the NR RLC device may include a function of transmitting a status report on the lost RLC PDUs to the transmitting side and a function of making a request for retransmitting the lost RLC PDUs.

The sequential delivery function (in-sequence delivery) of the NR RLC device may include a function of, if there is a lost RLC SDU, sequentially transferring only RLC SDUs preceding the lost RLC SDU to the higher layer.

The sequential delivery function (in- sequence delivery) of the NR RLC device may include a function of, if a predetermined timer expires even though there are lost RLC SDUs, sequentially transferring all RLC SDUs received before the timer starts to the higher layer.

The sequential delivery function (in-sequence delivery) of the NR RLC device may include may include a function of, if a predetermined timer expires even though there are lost RLC SDUs, sequentially transferring all RLC SDUs received up to now to the higher layer.

The NR RLC device may sequentially process RLC PDUs in the order of reception regardless of sequence numbers (out-of-sequence delivery) and transfer the RLC PDUs to the NR PDCP device.

When receiving segments, the NR RLC device may receive segments stored in the buffer or to be received in the future, reconfigure the segments to be one complete RLC PDU, and then transfer the RLC PDU to the NR PDCP device.

The NR RLC layer may not include a concatenation function. Alternatively, the NR MAC layer may perform the concatenation function, or the concatenation function may be replaced with a multiplexing function of the NR MAC layer.

In the above description, the non-sequential delivery function (out-of-sequence delivery) of the NR RLC device may be a function of directly transferring RLC SDUs received from the lower layer to the higher layer regardless of the sequence. When one RLC SDU is divided into a plurality of RLC SDUs and received, the non-sequential delivery function (out-of-sequence delivery) of the NR RLC device may include a function of reassembling and then transmitting the RLC SDUs. The non-sequential delivery function (out-of- sequence delivery) of the NR RLC device may include a function of storing RLC SNs or PDCP SNs of the received RLC PDUs, ordering the same, and recording lost RLC PDUs.

The NR MACs 2-15 and 2-30 may be connected to a plurality of NR RLC layer devices configured in one UE and main functions of the NR MAC may include some of the following functions.
- Mapping function (Mapping between logical channels and transport channels)
- Multiplexing and demultiplexing function (Multiplexing/demultiplexing of MAC SDUs)
- Scheduling information report function (scheduling information reporting)
- HARQ function (Error correction through HARQ)
- Logical channel priority control function (Priority handling between logical channels of one UE)
- UE priority control function (Priority handling between UEs by means of dynamic scheduling)
- MBMS service identification function (MBMS service identification)
- Transport format selection function (Transport format selection)
- Padding function (Padding)

The NR PHY layers 2-20 and 2-25 perform an operation for channel-coding and modulating higher layer data to generate an OFDM symbol and transmitting the OFDM symbol through a radio channel or demodulating and channel-decoding the OFDM symbol received through the radio channel and transmitting the demodulated and channel-decoded OFDM symbol to the higher layer.

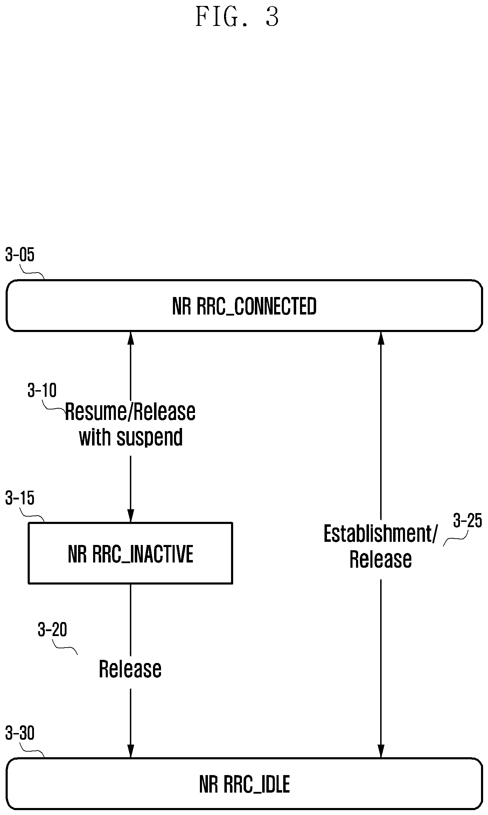

FIG. 3 illustrates transition of a radio access state in a next-generation mobile communication system according to an embodiment of the disclosure.

The next-generation mobile communication system has three radio access states (radio resource control (RRC) states). A connected mode (RRC_CONNECTED) 3-05 may be a radio access state in which the UE can transmit and receive data. An idle mode (RRC_IDLE) 3-30 may be a radio access state in which the UE monitors whether paging is transmitted to the UE itself. The connected mode 3-05 and the idle mode are radio access state applied to the conventional LTE system, and a detailed technology is the same as that of the conventional LTE system. A new inactive (RRC_INACTIVE) radio access state 3-15 is assumed in the next-generation mobile communication system. In the disclosure, the RRC_INACTIVE radio access state 3-15 newly defined in the next-generation mobile communication system may correspond to an inactive radio access state, an INACTIVE mode, a deactivated mode, or the like.

In the RRC_INACTIVE radio access state 3-15, UE context is maintained in the NR gNB and the UE, and RAN-based paging may be supported. Characteristics of the RRC_INACTIVE radio access state are listed below.
- Cell re-selection mobility;
- CN - NR RAN connection (both C/U-planes) has been established for UE;
- The UE AS context is stored in at least one gNB and the UE;
- Paging is initiated by NR RAN;
- RAN-based notification area is managed by NR RAN;
- NR RAN knows the RAN-based notification area which the UE belongs to;

According to an embodiment, the INACTIVE radio access state may transition to the connected mode 3-05 or the idle mode 3-30 through a specific procedure. The INACTIVE mode 3-15 may switch to the connected mode 3-05 according to a resume process, and the connected mode 3-05 may switch to the INACTIVE mode 3-15 through a release procedure including suspend configuration information. One or more RRC messages may be transmitted and received between the UE and the NR gNB during the procedure 3-10, and the procedure 3-10 may include one or more steps. The INACTIVE mode 3-15 may switch to the idle mode 3-30 through the release procedure after the resume in operation 3-20.

Switching between the connected mode 3-05 and the idle mode 3-30 may be performed according to the conventional LTE technology. That is, switching between the connected mode 3-05 and the idle mode 3-30 may be performed through an establishment or release procedure.

In order to transmit and receive normal data, the UE in the INACTIVE radio access state should switch to the connected mode 3-05 via the process 3-10. A method proposed in the disclosure may be applied to the case in which the UE transmits small data (SD) while maintaining the inactive state (without switching to the connected mode). The small data may be, for example, a transmitted message having a relatively small size or data having a small size, such as a heart rate of a user of a wearable communication device. Alternatively, for example, the small data may be defined as data having a size that can be included in one transport block (TB). In the disclosure, for convenience of description, a method of transmitting and receiving small data is described, but the scope of the disclosure is not limited by a general meaning of the term. For example, embodiments proposed in the disclosure may be applied to data having a size that can be transmitted and received according to a method described below in the state in which the UE maintains the inactive state without switching to the connected mode.

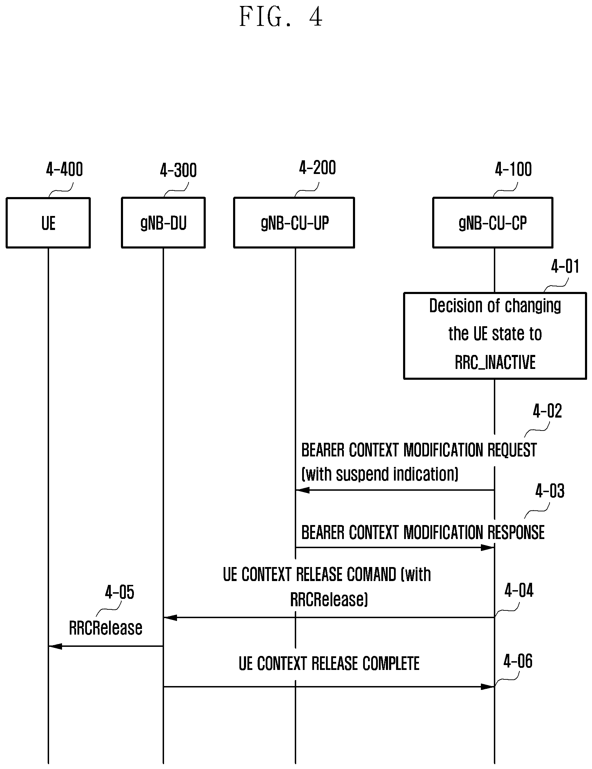

FIG. 4 is a sequence diagram illustrating a process in which a UE accessing a split base station (split gNB) switches to an inactive radio access state in a next-generation mobile communication system according to an embodiment of the disclosure.

When a CU-CP 4-100 of the split base station (split gNB) determines to switch a specific UE 4-400 accessing the corresponding RAN to the INACTIVE state in operation 4-01, a suspend indication may be inserted into a BEARER CONTEXT MODIFICATION REQUEST message and transmitted to a CU-UP 4-200 in operation 4-02. The CP-UP 4-200 may transmit a BEARER CONTEXT MODIFICATION RESPONSE in response thereto in operation 4-03. At this time, BEARER CONTEXT for the corresponding UE may be maintained between the CU-CP 4-100 and the CU-UP 4-200 without being removed. The CU-CP 4-100 may transmit a UE CONTEXT RELEASE COMMAND message to a DU 4-300 of the RAN to remove the UE context for the corresponding UE in operation 4-04. The DU 4-300 receiving the message may transmit an RRCRelease message to the UE 4-400 in operation 4-05, so as to allow the UE 4-400 to transition to the INACTIVE mode and also may transmit a UE CONTEXT RELEASE COMPLETE message to the CU-CP 4-100, so as to inform of removal of the UE context in operation 4-06.

The UE may transition to the INACTIVE mode through the process. The split base station (split gNB) may remove the UE context of the corresponding UE existing between the DU and the CU and recognize that the corresponding UE transitions to the INACTIVE mode while maintaining bearer context of the corresponding UE existing between the CU-UP and the CU-CP. The method proposed in the disclosure may be applied to the UE transitioning to the INACTIVE mode through the process and the RAN.

### <First embodiment>

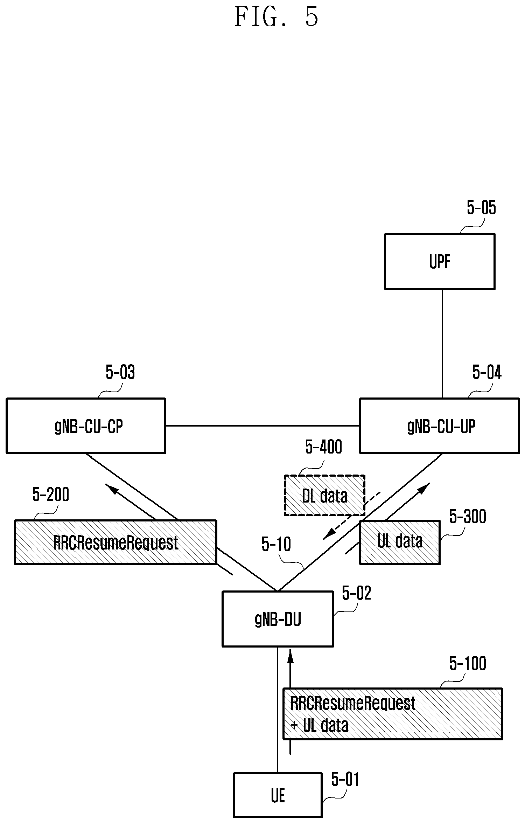

FIG. 5 illustrates a method of transmitting small data (SD) transmitted by an inactive mode UE to a user plane and a structure of a split base station (split gNB) and a tunnel configuration for supporting the method according to a first embodiment of the disclosure.

A UE 5-01 may simultaneously transmit an RRC message (for example, an RRCResumeRequest message) and uplink data (UL data) to a gNB-DU 5-02 in order to transmit small data to the user plane in the inactive mode in operation 5-100. For example, the UL data may be transmitted while being inserted into the RRCResumeRequest message or may be transmitted through separated signaling. The gNB-DU 5-02 may transfer the RRCResumeRequest in the received message to a gNB-CU-CP 5-03 in operation 5-200, and transmit the UL data to a gNB-CU-UP 5-04 in operation 5-300 to allow the UL data to be transferred to a user plane function (UPF) 5-05. As illustrated in FIG. 4, when the specific UE 5-01 is in the inactive mode, UE context between the gNB-DU 5-02 and the gNB-CUs 5-03 and 5-04 may have been removed. In this case, a tunnel 5-10 through which the gNB-DU 5-02 transmits data to the gNB-CU-UP 5-04 may not exist, and accordingly, the gNB-DU 5-02 cannot simultaneously transmit the RRCResumeRequest message to the gNB-CU-CP 5-04 in operation 5-200 and the UL data to the gNB-CU-UP 5-04 in operation 5-300.

According to the first embodiment of the disclosure, the gNB-DU 5-02 may first transfer the RRCResumeRequest message to the gNB-CU-CP while storing (or saving) the UL data in the buffer, inform of arrival of small data from the corresponding UE, and set up the tunnel 5-10 and user context for data transmission between the gNB-CU-UP 5-04 and the gNB-DU 5-02. After the tunnel configuration has finished, the gNB-DU 5-02 may transmit the stored UL data to the gNB-CU-UP 5-04, and the UL data may be transferred to the UPF 5-05. If there is downlink data to be transferred to the UE 5-01, the gNB-CU-UP 5-04 may transfer the DL data to the gNB-DU 5-02 through the generated tunnel in operation 5-400.

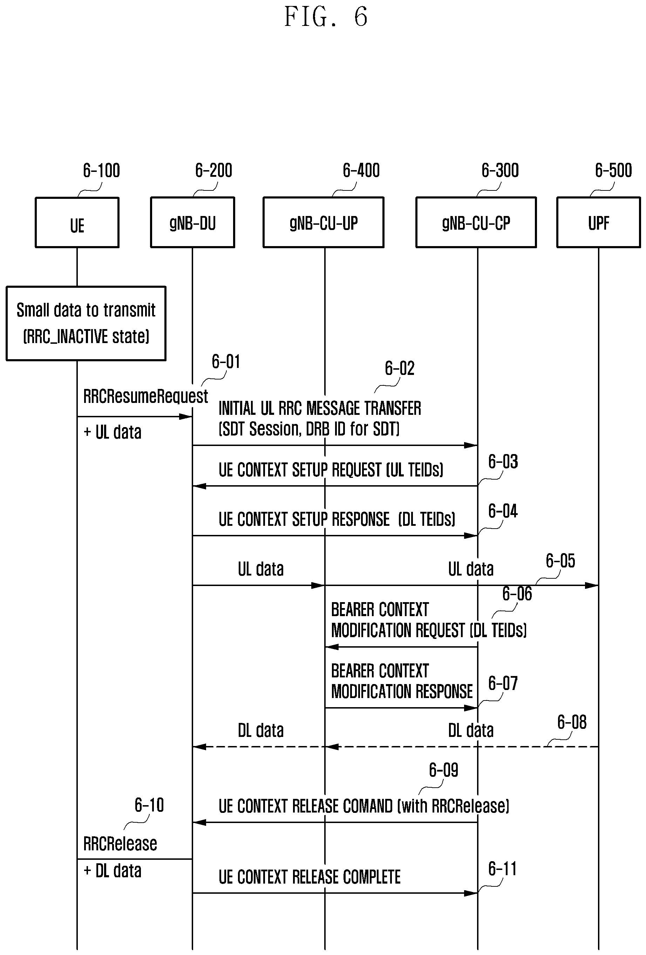

FIG. 6 is a sequence diagram illustrating the operation between the UE and the split base station (split gNB) or inside the split base station (split gNB) according to the first embodiment of the disclosure.

A UE 6-100 may simultaneously transmit an RRC message (for example, an RRCResumeRequest message) and UL data to a gNB-DU 6-200 in order to transmit small data in the state in which the inactive mode is maintained in operation 6-01. For example, the UL data may be transmitted while being inserted into the RRCResumeRequest message or may be transmitted through separated signaling.

A gNB-DU 6-200 may insert the RRCResumeRequest message received from the UE 6-100 into a message (for example, an INITIAL UL RRC MESSAGE TRANSFER message) to be transferred to gNB-CUs 6-300 and 400 and transfer the RRCResumeRequest message to the gNB-CU-CP 6-300 in operation 6-02. At this time, the INITIAL UL RRC MESSAGE TRANSFER message may include at least one of an indicator (for example, a SDT session) indicating that the current operation is for small data transmission (SDT) and an ID of a data radio bearer (DRB) used by the UE to transmit UL data. Meanwhile, the gNB-DU 6-200 may not directly transmit the UL data received together with the RRCResumeRequest but may store the same in the buffer.

After receiving the INITIAL UL RRC MESSAGE TRANSFER message, the gNB-CU-CP 6-300 may transmit a message (for example, a UE CONTEXT SETUP REQUEST message) for generating a tunnel for UL data transmission to the gNB-DU 6-200 in operation 6-03. Accordingly, it is possible to prepare processing of the UL data transmitted by the UE. The gNB-CU-CP 6-300 may configure only the corresponding DRB when the DRB ID used for SDT is acquired through the received INITIAL UL RRC MESSAGE TRANSFER, and may configure all DRBs when there is not acquired DRB ID. To this end, DRB configuration information may be transmitted while being inserted into the UE CONTEXT SETUP REQUEST message. The DRB configuration information may include an endpoint address (uplink endpoint) of the tunnel through which the gNB-CU-UP 6-400 can receive the uplink data. Accordingly, the gNB-DU 6-200 receiving the message may transmit UL data through the generated tunnel. The UL data transmitted from the gNB-DU 6-200 may be transferred to a UPF 6-500 via the gNB-CU-UP 6-400.

The gNB-DU 6-200 may transmit the UL data, which the gNB-DU 6-200 stores, through the tunnel acquired by operation 6-03 in operation 6-05.

Further, the gNB-DU 6-200 may transmit a response message (for example, a UE CONTEXT SETUP RESPONSE message) to the gNB-CU-CP 6-300 in response to the UE CONTEXT SETUP REQUEST message in operation 6-04. The corresponding UE CONTEXT SETUP RESPONSE message may include an endpoint address (downlink endpoint) of the tunnel through which the gNB-DU 6-200 can receive the DL data. Accordingly, the gNB-CU-CP 6-300 receiving the UE CONTEXT SETUP RESPONSE message may identify the endpoint address.

That is, according to an embodiment of the disclosure, the uplink endpoint for UL data transmission may be transferred to the gNB-DU 6-200 through a request message, and the downlink endpoint may be transferred to the gNB-CU-CP 6-300 through a response message.

The gNB-CU-CP 6-300 may transmit a message (for example, a BEARER CONTEXT MODIFICATION REQUEST message) for informing the gNB-CU-UP 6-400 of tunnel information for transmission of DL data acquired through operation 6-04 in operation 6-06. The message may include, for example, downlink endpoint information.

The gNB-CU-UP 6-400 may transmit a response message (for example, a BEARER CONTEXT MODIFICATION RESPONSE message) to the gNB-CU-CP 6-300 in response to the BEARER CONTEXT MODIFICATION REQUEST message in operation 6-07.

The uplink and downlink tunnels may be generated between the gNB-DU 6-200 and the gNB-CU-UP 6-400 in operations 6-03 to 6-06, and all of UL data and DL data may be transmitted through the corresponding tunnels. As described above, the UL data may be transmitted after the gNB-DU 6-200 receives the UE CONTEXT SETUP REQUEST in operation 6-03 and acquires (identifies) the UL endpoint address, and the DL data may be transmitted after the gNB-CU-UP 6-400 acquires (identifies) the DL endpoint address from the gNB-CU-CP 6-300 through the BEARER CONTEXT MODIFICATION REQUEST message.

After receiving the UL data from the gNB-CU-UP 6-400, the UPF 6-500 may transmit DL data to the gNB-CU-UP 6-400 when there is the DL data heading for the UE 6-100 having transmitted the corresponding data in operation 6-08. Alternatively, after receiving the UL data from the gNB-CU-UP 6-400, the UPF 6-500 may transmit DL data to the gNB-CU-UP 6-400 after a predetermined time when there is the DL data heading for the UE 6-100 having transmitted the corresponding data. This it because the DL data can be transmitted to the gNB-DU 6-200 only when the gNB-CU-UP 6-400 acquires the DL endpoint address. How long after the UPF 6-500 receives the UL data to transmit the DL data may be determined using a timer, which may follow an implementation method. If there is no DL data to be transmitted to the UE 6-100, operation 6-08 may be omitted.

According to an embodiment, when there is no DL data heading for the UE 6-100 or there is no additional DL data after operation 6-08, the gNB-CU-CP 6-300 may transmit a message (For example, a UE CONTEXT RELEASE COMMAND message) for removing UE context to the gNB-DU 6-200 in operation 6-09.

The gNB-DU 6-200 receiving the UE CONTEXT RELEASE COMMAND message may transmit an RRC message (for example, an RRCRelease message) included in the message to the UE 6-100 in operation 6-10. At this time, the gNB-DU 6-200 may also transfer the DL data received in operation 6-08 together with the RRCRelease message to the UE 6-100. For example, the DL data may be transmitted while being inserted into the RRCRelease message or may be transmitted through separate signaling.

The gNB-DU 6-200 may transmit a message (for example, a UE CONTEXT RELEASE COMPLETE message) for informing the gNB-CU-CP 6-300 of removal of the UE context in operation 6-11, and the gNB-CU-CP 6-300 may identify the removal of the UE context on the basis of the message.

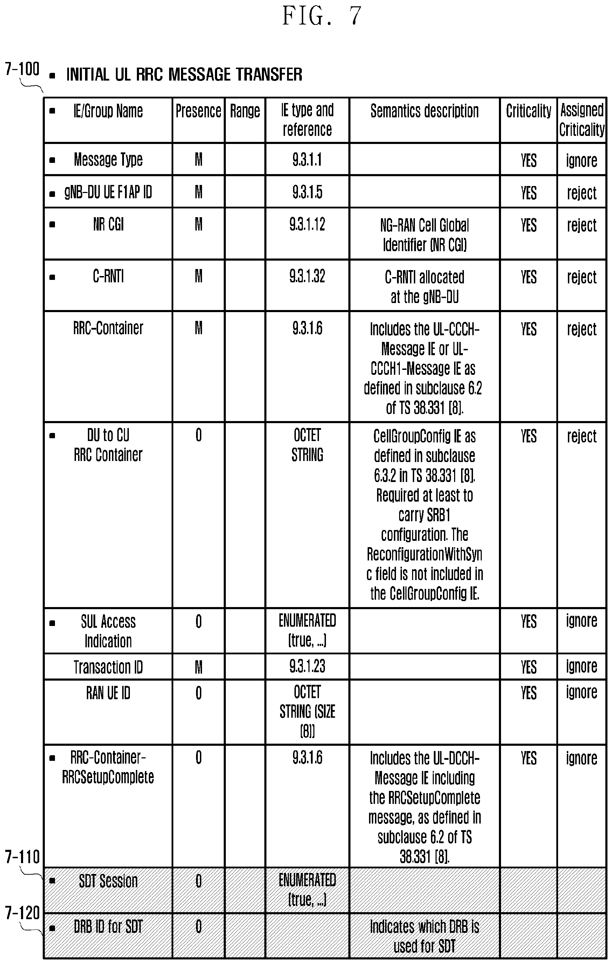

FIG. 7 illustrates messages and information elements (IEs) according to the first embodiment of the disclosure.

The message (for example, the INITIAL UL RRC MESSAGE TRANSFER message) 7-100 transmitted to transfer the RRC message which the gNB-DU receives from the UE to the gNB-CU-CP may include at least one of information or an IE (for example, an SDT session) 7-110 indicating that the RRC message transmitted by the UE is for SDT and information or an IE (for example, a DRB ID for SDT) 7-120 indicating a DRB ID used for transmitting UL data. According to an embodiment, when the SDT session in the INITIAL UL RRC MESSAGE TRANSFER received by the gNB-CU-CP is configured as true, the message may be recognized as the RRC message for SDT and UE context related to the DRB corresponding to the DRB ID for SDT may be set up. Meanwhile, all the information is necessarily included in one message, but only some thereof may be included and other information may be further included. Respective pieces of information may be transmitted through separate messages.

### <Second embodiment>

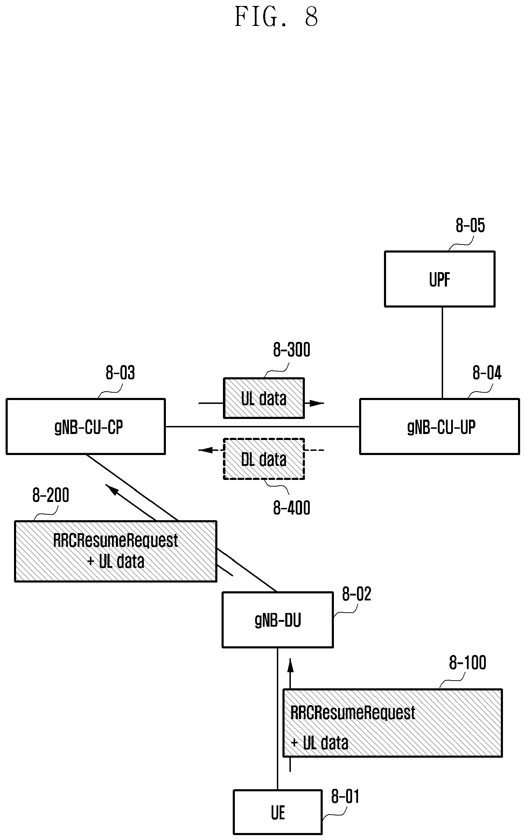

FIG. 8 illustrates a method of transmitting small data (SD) transmitted by an inactive mode UE to a user plane and a structure of a split base station (split gNB) for supporting the method according to a second embodiment of the disclosure.

A UE 8-01 may simultaneously transmit an RRC message (for example, an RRCResumeRequest message) and UL data to a gNB-DU 8-02 in order to transmit small data to the user plane in the inactive mode in operation 8-100. For example, the UL data may be transmitted while being inserted into the RRCResumeRequest message or may be transmitted through separated signaling. The gNB-DU 8-02 may transfer all the received message (RRCResumeRequest+UL data) to a gNB-CU-CP 8-03 in operation 8-200, and the gNB-CU-CP 8-03 may transfer the UL data to the gNB-CU-UP 8-04 in operation 8-300 and finally transmit the same to the UPF 8-05. Even when there is downlink data (DL data) to be transmitted to the UE 8-01, the gNB-CU-UP 8-04 may transfer DL data to the gNB-CU-CP 8-03 in operation 8-400, so as to transmit the same to the gNB-DU 8-02. Accordingly, in the method described in FIG. 8, unlike the method illustrated in FIG. 5, a configuration of a separate tunnel for transmitting UL data or DL data between the gNB-CU-UP 8-04 and the gNB-DU 8-02 may not be needed.

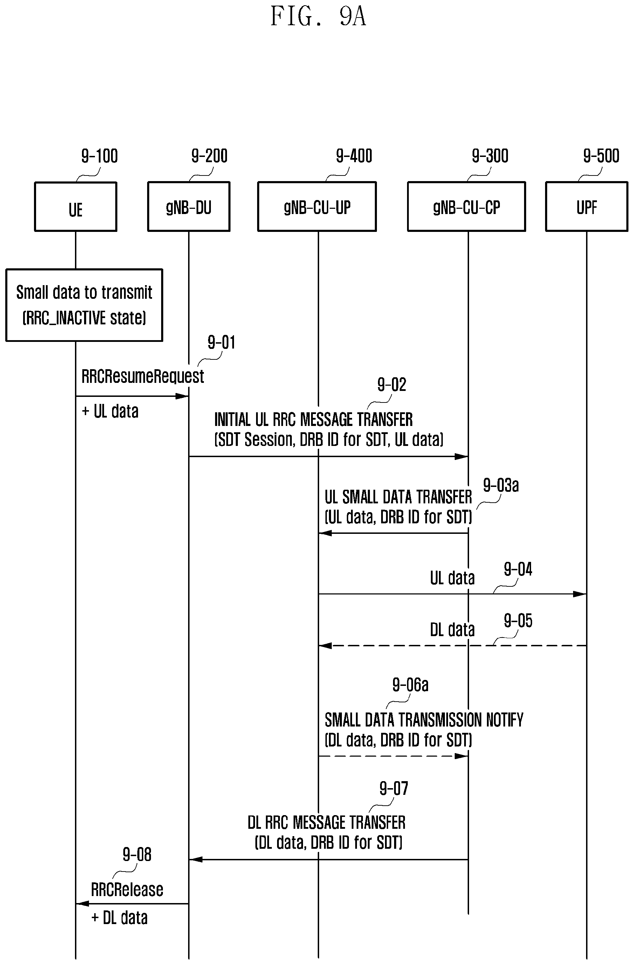

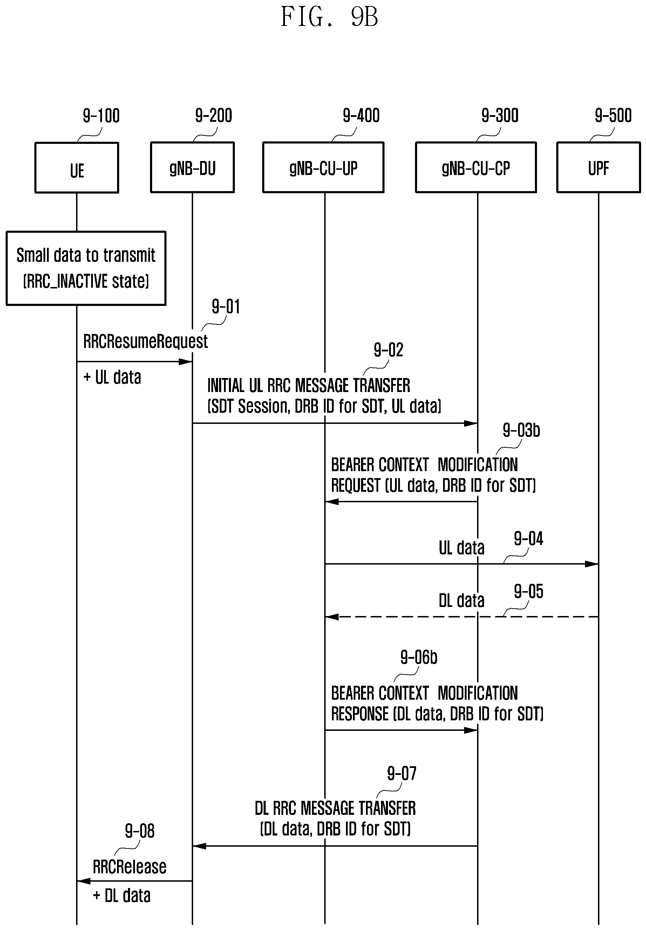

FIGs. 9A and 9B are sequence diagrams illustrating the operation between the UE and the split base station (split gNB) or inside the split base station (split gNB) according to the second embodiment of the disclosure.

A UE 9-100 may simultaneously transmit an RRC message (for example, an RRCResumeRequest message) and UL data to a gNB-DU 9-200 in order to transmit small data in the state in which the inactive mode is maintained in operation 9-01. For example, the UL data may be transmitted while being inserted into the RRCResumeRequest message or may be transmitted through separated signaling.

A gNB-DU 9-200 may insert the RRCResumeRequest message into an RRC container within a message (for example, an INITIAL UL RRC MESSAGE TRANSFER message) for transferring the RRC message received from the UE 9-100 to gNB-CUs 9-300 and insert the UL data into a UL SD-container to transmit the same to the gNB-CU-CP 9-300 in operation 9-02. At this time, the INITIAL UL RRC MESSAGE TRANSFER message may include at least one of an indicator (for example, a SDT session) indicating that the current operation is for small data transmission (SDT) and an ID of a data radio bearer (DRB) used by the UE to transmit UL data.

After receiving the INITIAL UL RRC MESSAGE TRANSFER message, the gNB-CU-CP 9-300 may transmit the UL data in the UL SD-container within the corresponding message to the gNB-CU-UP 9-400 to transfer the same to the UPF. Accordingly, two methods therefor are presented in the second embodiment of the disclosure.

### Method 1-1)

First, the gNB-CU-CP 9-300 may newly define a message for transferring UL data to the gNB-CU-UP 9-400. In the disclosure, the newly defined message is referred to as, for example, a UL SMALL DATA TRANSFER message.

In operation 9-03a, the gNB-CU-UP 9-300 may insert the UL data received in operation 9-02 into the UL SD-container within the UL SMALL DATA TRANSFER message and transmit the same to the gNB-CU-UP 9-400. According to an embodiment, at this time, the DRB ID received in operation 9-02 may be also inserted into the UL SMALL DATA TRANSFER message and then transmitted. This is because the gNB-CU-UP 9-400 should know a PDCP through which data is processed. The gNB-CU-UP 9-400 may acquire DRB information for transmission of the UL data to process the data through a PDCP that matches the corresponding DRB and transmit the data to the UPF 9-500.

### Method 1-2)

Second, information or an information element (IE) for transmitting UL data, which is included in the existing message (for example, the BEARER CONTEXT MODIFICATION REQUEST message) transmitted from the gNB-CU-CP 9-300 to the gNB-CU-UP 9-400 may be newly defined. In the disclosure, the newly defined IE is referred to as, for example, a UL SD-container IE.

In operation 9-03b, the gNB-CU-CP 9-300 may insert the UL data received in operation 9-02 into the UL SD-container within the BEARER CONTEXT MODIFICATION REQUEST message and transmit the same to the gNB-CU-UP 9-400. According to an embodiment, as described in Method 1-1), since the gNB-CU-UP 9-400 should know the PDCP through which the data is processed, the DRB ID should also be inserted into the BEARER CONTEXT MODIFICATION REQUEST message.

The gNB-CU-UP 9-400 may transmit the received UL data to the UPF 9-500 in operation 9-04.

After receiving the UL data from the gNB-CU-UP 9-400, the UPF 9-500 may transmit DL data to the gNB-CU-UP 9-400 when there is data to be transmitted to the corresponding UE 9-100 in operation 9-05. If there is no DL data to be transmitted to the UE 9-100, operations described below may be omitted.

When receiving the DL data, the gNB-CU-UP 9-400 may transfer the DL data to the gNB-CU-CP 9-300 so as to allow the gNB-CU-CP 9-300 to transmit the DL data to the gNB-DU 9-200. Accordingly, two methods therefor are presented in the second embodiment of the disclosure.

### Method 2-1)

First, the gNB-CU-UP 9-400 may newly define a message for transferring DL data to the gNB-CU-CP 9-300. In the disclosure, the newly defined message is referred to as, for example, a SMALL DATA TRANSMISSION NOTIFY message.

When there is DL data received from the UPF 9-500 in operation 9-05, the gNB-CU-UP 9-400 may insert the DL data into the DL SD-container within the SMALL DATA TRANSMISSION NOTIFY message and transmit the same to the gNB-CU-CP 9-300 in operation 9-06a. According to an embodiment, a DRB ID may also be inserted and transmitted to allow the gNB-DU 9-200 receiving the DL data to determine an RLC that matches the DL data. Meanwhile, there is no DL data to be transmitted to the UE 9-100, the corresponding message may not be transmitted. A time point at which the corresponding message is transmitted may be determined using a timer, which may follow an implementation method.

### Method 2-2)

Second, information or an IE for transmitting DL data, which is included in the existing message (for example, the BEARER CONTEXT MODIFICATION RESPONSE message) transmitted from the gNB-CU-UP 9-400 to the gNB-CU-CP 9-300 may be newly defined. In the disclosure, the newly defined IE is referred to as, for example, a DL SD-container.

When there is DL data received from the UPF 9-500 in operation 9-05, the gNB-CU-UP 9-400 may insert the DL data into the DL SD-container within the BEARER CONTEXT MODIFICATION RESPONSE message and transmit the same to the gNB-CU-CP 9-300 in operation 9-06b. According to an embodiment, as described in Method 2-1), a DRB ID may also be inserted into the BEARER CONTEXT MODIFICATION RESPONSE message and transmitted to allow the gNB-DU 9-200 receiving the DL data to determine an RLC that matches the DL data. A time point at which the corresponding message is transmitted may be determined using a timer, which may follow an implementation method. Meanwhile, unlike Method 2-1), the RESPONSE message may be transmitted as a response to the BEARER CONTEXT MODIFICATION REQUEST message even when there is no DL data.

The gNB-CU-CP 9-300 receiving the SMALL DATA TRANSMISSION NOTIFY message or the BEARER CONTEXT MODIFICATION RESPONSE message in operation 9-06a or 9-06b may insert an RRCRelease message into an RRC container within a message (for example, a DL RRC MESSAGE TRANSFER message) for transferring the RRC message to be transmitted to the UE 9-100 to the gNB-DU 9-200 and transmit the message to the gNB-DU 9-200 in operation 9-07. At this time, when there is DL data received in operation 9-06a or 9-06b, the gNB-CU-CP 9-300 may insert the corresponding data into the DL SD-container within the DL RRC MESSAGE TRANSFER message and also insert a DRB ID corresponding to the DL data, and transmit the message to the gNB-DU 9-200.

The gNB-DU 9-200 receiving the DL RRC MESSAGE TRANSFER message may transmit the RRCRelease message within the DL RRC MESSAGE TRANSFER to the UE 9-100 in operation 9-08. When there is received DL data, the RRCRelease message and the DL data may be transferred together to the UE in operation 9-07. At this time, the DL data may be transmitted through a DRB corresponding to the DRB ID received together. For example, the DL data may be inserted into the RRCRelease message and transmitted or may be transmitted through separate signaling.

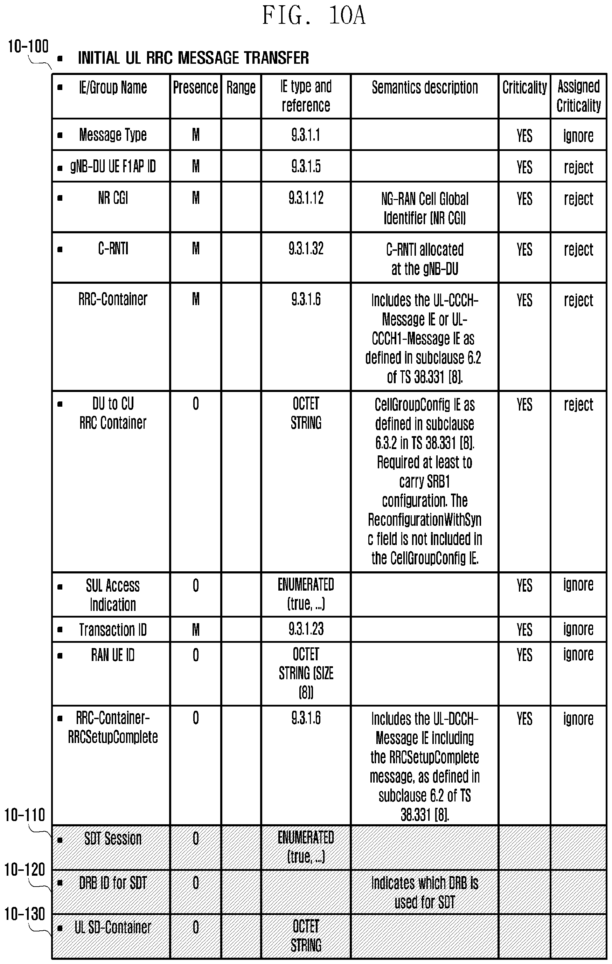

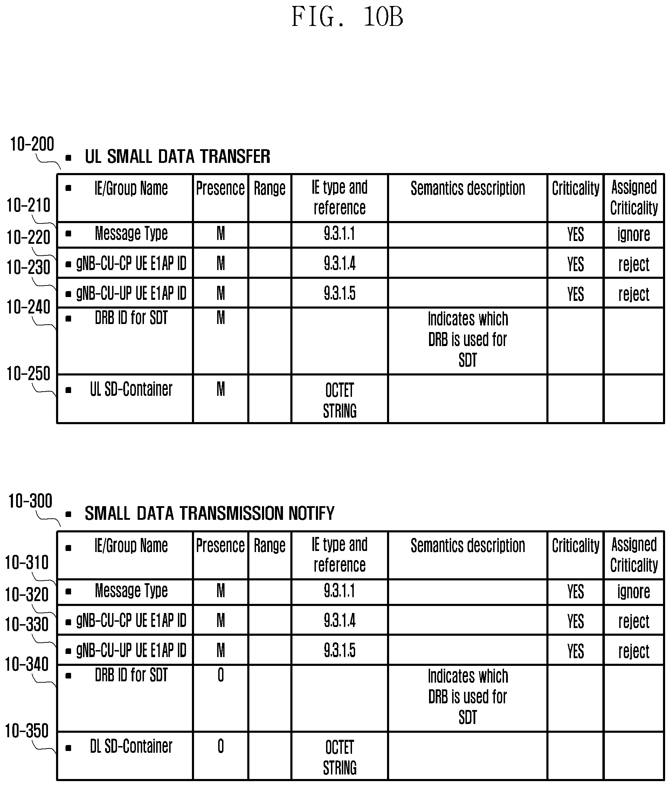

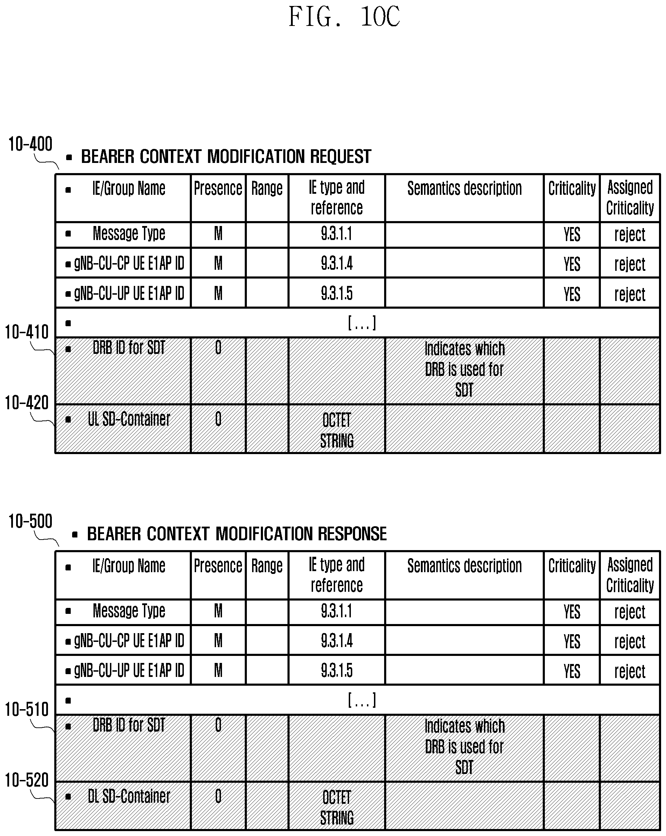

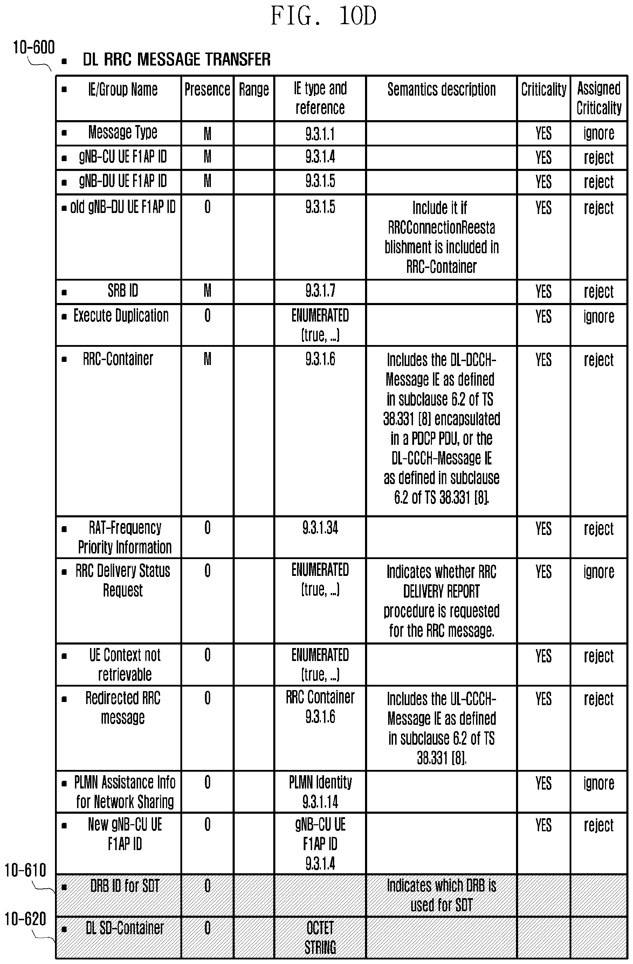

FIGs. 10A to 10D illustrate messages and information elements (IEs) according to the second embodiment of the disclosure.

The message (for example, the INITIAL UL RRC MESSAGE TRANSFER) 10-100 for transferring the RRC message which the gNB-DU receives from the UE may include at least one of information or an IE (for example, an SDT session) 10-110 indicating that the RRC message transmitted by the UE is for small data transmission (SDT) and information (for example, a DRB ID for SDT) 10-120 indicating a DRB ID used for transmitting UL data. Further, UL data may be further included into the message 10-100 through a UL SD-container 10-130 IE and transmitted to the gNB-CU-CP.

In order to transfer the UL data received from the gNB-DU to the gNB-CU-UP, a newly defined message (for example, a UL SMALL DATA TRANSFER message) 10-200 may be transmitted to the gNB-CU-UP according to Method 1-1) described above. Alternatively, according to Method 1-2) described above, newly defined information or IE may be added to the existing message (for example, the BEARER CONTEXT MODIFICATION REQUEST message) 10-400 transmitted from the gNB-CU-CP to the gNB-CU-UP and transmitted in order to transfer the UL data.

According to Method 1-1), the UL SMALL DATA TRANSFER message 10-200 which the gNB-CU-CP transmits to the gNB-CU-UP may include at least one of a message type 10-210, a gNB-CU-CP E1AP ID 10-220 of the UE transmitting the UL data, and a gNB-CU-UP E1AP ID 10-230. At least one of the DRB ID information (for example, the DRB ID for SDT) 10-240 and the UL SD-container 10-250 IE which are the same as those received from the gNB-DU may be further included.

Alternatively, according to Method 1-2), the BEARER CONTEXT MODIFICATION REQUEST message 10-400 which the gNB-CU-CP transmits to the gNB-CU-UP may further include at least one of the DRB ID information (for example, the DRB ID for SDT) 10-410 and the UL SD-container 10-420 IE which are the same as those received from the gNB-DU.

After transmitting the UL data to the UPF (or after receiving the DL data from the UPF if there is the DL data), the gNB-CU-UP may transmit a newly defined message (for example, a SMALL DATA TRANSMISSION NOTIFY message) 10-300 according to Method 2-1) in order to inform the gNB-CU-CP of the transmission or reception. Alternatively, according to Method 2-2) described above, newly defined information or IE may be added to the existing message, for example, the BEARER CONTEXT MODIFICATION REQUEST message 10-500 transmitted from the gNB- CU-UP to the gNB-CU-CP and transmitted in order to transfer the DL data.

According to Method 2-1), the SMALL DATA TRANSMISSION NOTIFY message 10-300 which the gNB-CU-UP transmits to the gNB-CU-CP may include at least one of a message type 10-310, a gNB-CU-CP E1AP ID 10-320 of the UE to receive DL data, and a gNB-CU-UP E1AP ID 10-330. At least one of the DL SD-container 10-350 for containing the DL data received from the UPF and information indicating the DRB ID (for example, the DRB ID for SDT) 10-340 may be further included.

Alternatively, according to Method 2-2), the BEARER CONTEXT MODIFICATION RESPONSE message 10-500 which the gNB-CU-UP transmits to the gNB-CU-UP may further include at least one of a DL SD-container 10-520 for containing DL data and information indicating a DRB ID (for example, the DRB ID for SDT) 10-510.

When there is DL data to be transmitted to the UE, the DL RRC MESSAGE TRANSFER message 10-600 may further include at least one of a DRB ID for SDT 10-610 and a DL SD-container 10-620 IE in order to transfer the DL data to gNB-DU by the gNB-CU-CP.

### <Third embodiment>

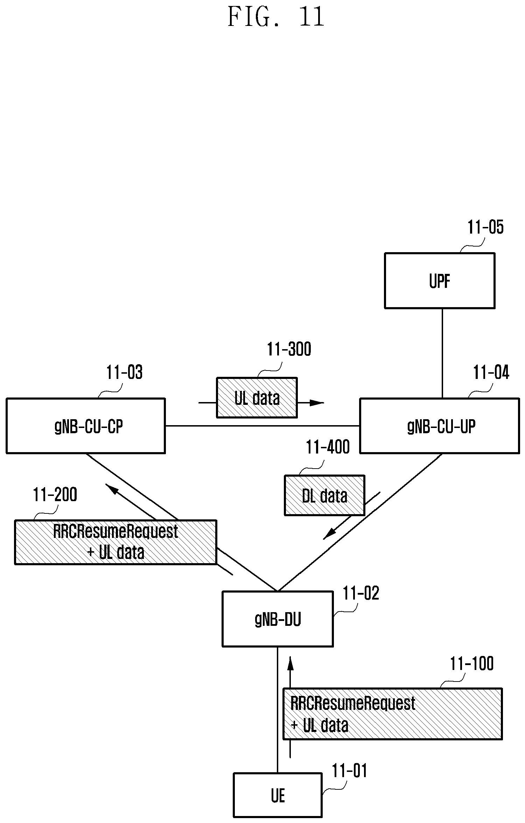

FIG. 11 illustrates a method of transmitting small data (SD) transmitted by an inactive mode UE to a user plane and a structure of a split base station (split gNB) for supporting the method according to a third embodiment of the disclosure. The method may be applied when the UPF has DL data to be transmitted to the UE.

A UE 11-01 may simultaneously transmit an RRC message (for example, an RRCResumeRequest message) and UL data to a gNB-DU 11-02 in order to transmit small data to the user plane in the inactive mode in operation 11-100. For example, the UL data may be transmitted while being inserted into the RRCResumeRequest message or may be transmitted through separated signaling. In the case of UL Data, as described in the second embodiment, the gNB-DU 11-02 may transfer all the received message (RRCResumeRequest+UL data) to a gNB-CU-CP 11-03 in operation 11-200, and the gNB-CU-CP 11-03 may transfer the UL data to the gNB-CU-UP 11-04 in operation 11-300 and finally transmit the same to the UPF 11-05. When there is downlink data (DL data) to be transmitted to the UE 11-01, a tunnel and user context for DL data transmission may be set up between the gNB-CU-UP 11-04 and the gNB-DU as described in the first embodiment. Through the configuration of the tunnel, the gNB-CU-UP 11-04 may transfer the DL data to the gNB-DU 11-02 in operation 11-400 and transmit the same to the UE 11-01.

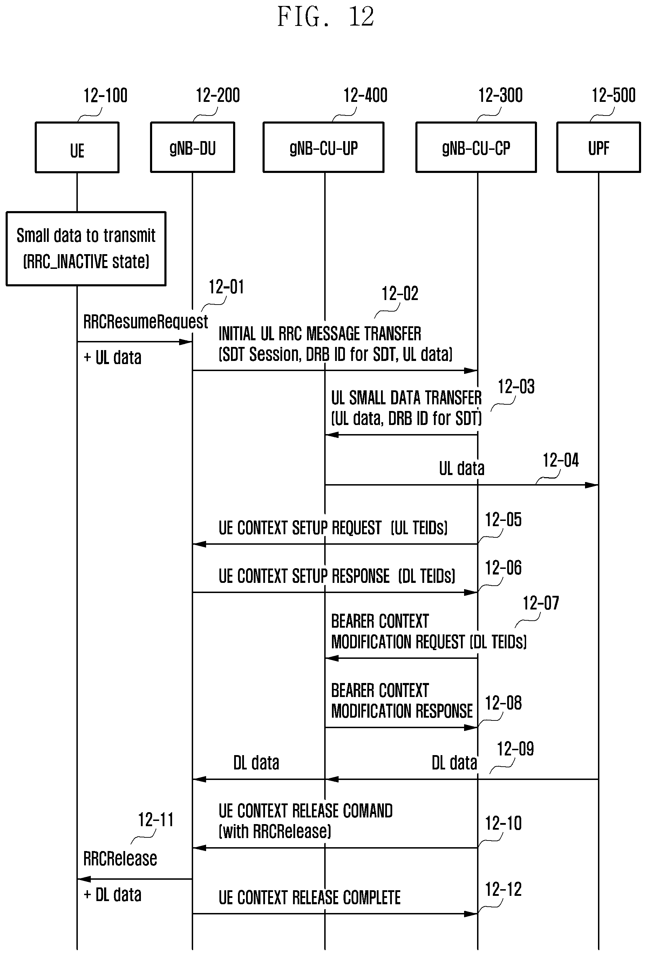

FIG. 12 is a sequence diagram illustrating the operation between the UE and the split base station (split gNB) or inside the split base station (split gNB) according to the third embodiment of the disclosure.

A UE 12-100 may simultaneously transmit an RRC message (for example, an RRCResumeRequest message) and UL data to a gNB-DU 12-200 in order to transmit small data in the state in which the inactive mode is maintained in operation 12-01. For example, the UL data may be transmitted while being inserted into the RRCResumeRequest message or may be transmitted through separated signaling.

A gNB-DU 12-200 may insert the RRCResumeRequest message into an RRC container within a message (for example, an INITIAL UL RRC MESSAGE TRANSFER message) for transferring the RRC message received from the UE 12-100 to gNB-CUs 12-300 and 12-400 and insert the UL data into a UL SD-container to transmit the same to the gNB-CU-CP 12-300 in operation 12-02. At this time, the INITIAL UL RRC MESSAGE TRANSFER message may include at least one of an indicator (for example, a SDT session) indicating that the current operation is for small data transmission (SDT) and an ID of a data radio bearer (DRB) used by the UE to transmit UL data.

After receiving the INITIAL UL RRC MESSAGE TRANSFER message, the gNB-CU-CP 12-300 may transmit the UL data in the UL SD-container within the corresponding message to the gNB-CU-UP 12-400 to transfer the same to the UPF. Accordingly, like in Method 1-1) of the second embodiment, the message (for example, the UL SMALL DATA TRANSFER message) by which the gNB-CU-CP 12-300 transfers UL data to the gNB-CU-UP 12-400 may be newly defined. Alternatively, like in Method 1-2), information or an information element (IE) for transmitting UL data, which is included in the existing message (for example, the BEARER CONTEXT MODIFICATION REQUEST message) transmitted from the gNB-CU-CP 12-300 to the gNB-CU-UP 12-400 may be newly defined.

In operation 12-03, the gNB-CU-CP 12-300 may insert the UL data received in operation 12-02 into the UL SD-container within the UL SMALL DATA TRANSFER message or the BEARER CONTEXT MODIFICATION REQUEST message and transmit the same to the gNB-CU-UP 12-400. According to an embodiment, at this time, the DRB ID received in operation 12-02 may also be inserted into the message and transmitted. This is because the gNB-CU-UP 12-400 should know a PDCP through which data is processed. The gNB-CU-UP 12-400 may acquire DRB information for transmission of the UL data to process the data through a PDCP that matches the corresponding DRB and transmit the data to the UPF 12-500.

The gNB-CU-UP 12-400 may transmit the received UL data to the UPF 12-500 in operation 12-04.

After receiving the INITIAL UL RRC MESSAGE TRANSFER message, the gNB-CU-UP 12-300 may transmit a UE CONTEXT SETUP REQUEST message to the gNB-DU 12-200 in operation 12-05.

Further, the gNB-DU 12-200 may transmit a response message (for example, a UE CONTEXT SETUP RESPONSE message) to the gNB-CU-CP 12-300 in response to the UE CONTEXT SETUP REQUEST message in operation 12-06. The corresponding UE CONTEXT SETUP RESPONSE message may include an endpoint address (downlink endpoint) of the tunnel for receiving DL data by the gNB-DU 12-200. Accordingly, the gNB-CU-CP 12-300 receiving the UE CONTEXT SETUP RESPONSE message may identify the endpoint address.

The gNB-CU-CP 12-300 may transmit a message (for example, a BEARER CONTEXT MODIFICATION REQUEST message) for informing the gNB-CU-UP 12-400 of tunnel information for transmission of DL data acquired through operation 12-04 in operation 12-007. The message may include, for example, downlink endpoint information.

The gNB-CU-UP 12-400 may transmit a response message (for example, a BEARER CONTEXT MODIFICATION RESPONSE message) to the gNB-CU-CP 12-300 in response to the BEARER CONTEXT MODIFICATION REQUEST message in operation 12-08.

The downlink tunnel may be generated between the gNB-DU 12-200 and the gNB-CU-UP 12-400 in operations 12-05 to 12-08, and DL data may be transmitted through the corresponding tunnel. As described above, the UL data may be transmitted to the gNB-CU-UP by the gNB-CP-CP 12-300 and finally transmitted to the UPF 12-500, and the DL data may be transmitted after a DL endpoint address is acquired (identified) from the gNB-CU-CP 12-300 by the gNB-CU-UP 12-400 through the BEARER CONTEXT MODIFICATION REQUEST message.

After receiving the UL data from the gNB-CU-UP 12-400, the UPF 12-500 may transmit DL data to the gNB-CU-UP 12-400 when there is the DL data heading for the UE 12-100 having transmitted the corresponding data in operation 12-09. Alternatively, after receiving the UL data from the gNB-CU-UP 12-400, the UPF 12-500 may transmit DL data to the gNB-CU-UP 12-400 after a predetermined time when there is the DL data heading for the UE 12-100 having transmitted the corresponding data. This it because the DL data can be transmitted to the gNB-DU 12-200 only when the gNB-CU-UP 12-400 acquires the DL endpoint address. How long after the UPF 12-500 receives the UL data to transmit the DL data may be determined using a timer, which may follow an implementation method.

According to an embodiment, when there is no additional DL data after operation 12-09, the gNB-CU-CP 12-300 may transmit a message (for example, a UE CONTEXT RELEASE COMMAND message) for removing UE context to the gNB-DU 12-200 in operation 12-10.

The gNB-DU 12-200 receiving the UE CONTEXT RELEASE COMMAND message may transmit an RRC message (for example, an RRCRelease message) included in the message to the UE 12-100 in operation 12-11. At this time, the gNB-DU 12-200 may also transfer the DL data received in operation 12-08 together with the RRCRelease message to the UE 12-100. For example, the DL data may be inserted into the RRCRelease message and transmitted or may be transmitted through separate signaling.

The gNB-DU 12-200 may transmit a message (for example, a UE CONTEXT RELEASE COMPLETE message) for informing the gNB-CU-CP 12-300 of removal of the UE context in operation 12-12, and the gNB-CU-CP 12-300 may identify the removal of the UE context on the basis of the message.

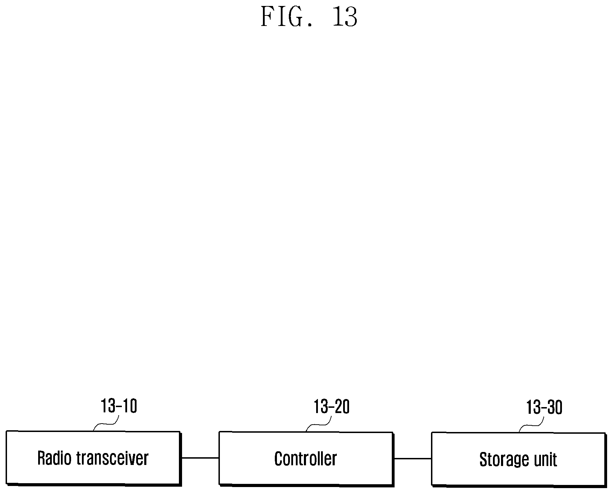

FIG. 13 illustrates a structure of the UE according to an embodiment of the disclosure.

Referring to FIG. 13, the UE may include a radio transceiver 13-10, a controller 13-20, and a storage unit 13-30. In the disclosure, the controller may be defined as a circuit, an application-specific integrated circuit, or at least one processor.

The radio transceiver 13-10 may transmit and receive a signal to and from another network entity. The radio transceiver 13-10 may receive, for example, a signal from the BS and transmit a signal including an RRC ResumeRequest message or small UL data (SDT UL data) to the BS.

The controller 13-20 may control the overall operation of the UE according to an embodiment proposed in the disclosure. For example, the controller 13-20 may control the signal flow between respective blocks to perform the operation according to the flowchart described above. Specifically, the controller 13-20 may control the operation proposed in the disclosure, such as transmitting the RRC ResumeRequest message to the gNB-DU and determining a radio access state on the basis of the received RRC Release message according to an embodiment of the disclosure.

The storage unit 13-30 may store at least one piece of information transmitted and received through the transceiver 13-10 and information generated through the controller 13-20. For example, the storage unit 13-30 may store radio access state information and DL data.

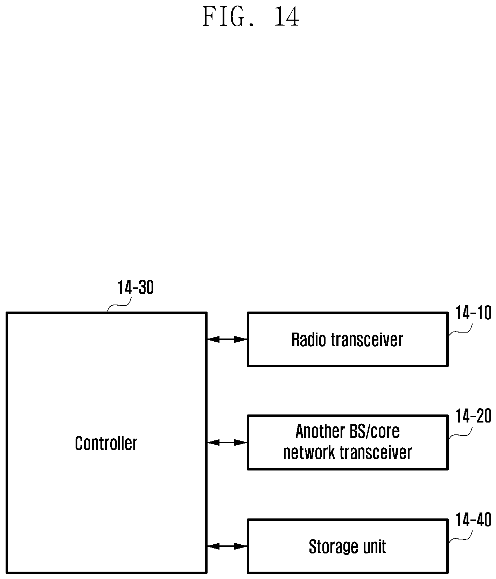

FIG. 14 illustrates a structure of the BS according to an embodiment of the disclosure.

Referring to FIG. 14, the BS may include a radio transceiver 14-10, another BS/core network transceiver 14-20, a controller 14-30, and a storage unit 14-40. In the disclosure, the controller may be defined as a circuit, an application-specific integrated circuit, or at least one processor.

The BS illustrated in FIG. 14 may be an RAN node including both the gNB-CU and the gNB-DU. The RAN node may be a mobile communication BS such as an LTE evolved Node B (eNodeB) or a next generation Node B (NR gNB or gNodeB) connected to a mobile communication core network (CN) such as an evolved packet core (EPC) or a 5G core network (5GC). Further, the RAN Node may be divided into a centralized unit (CU) and a distributed unit (DU), and the CU may be divided into a CU-control plane (CP) and a CU-user plane (UP).

According to an embodiment, one RAN Node may include one or more CU-CPs, one or more CU-Ups, and one or more DUs. Further, CU-CPs, CU-UPs, and DUs included in one RAN Node may be configured together. For example, one RAN Node may include a CU in which a CU-CP and a CU-UP are configured together and a DU. In another example, a CU-CP and a DU may be configured together in one RAN Node, and a CU-UP may be separately configured therein. In another example, one RAN node may be configured in the form of a aggregated base station (aggregated gNB) in which a CU-CP, a CU-UP, and a DU are configured together. One RAN Node may be configured by another combination as well as the above-described examples.

According to an embodiment, the CU and the DU may separately support BS functions. For example, the CU may support RRC/PDCP layers, and the DU may support RLC/MAC/PHY/RF layers. Further, the CU and the DU may be connected through an interface between functions inside the BS, such as a W1 or F1 interface.

According to an embodiment, the CU may be divided in to a CU-CP and a CU-UP. For example, the CU-CP may support the RRC/PDCP (for RRC) layers, the CU-UP may support the PDCP (for user data transmission) layer, and the CU-CP and the CU-UP may be connected through an interface between functions inside the BS, such as an E1 interface.

According to an embodiment, BSs may be configured in an aggregated structure or a split structure, and connections between aggregated base stations (aggregated gNBs), between split base stations (split gNBs), and between an aggregated base station (aggregated gNB) and a split base station (split gNB) may be possible. RAN Nodes may be connected through an inter-BS interface such as an X2 or Xn interface. Further, the RAN Node and the core network may be connected through an interface between the BS and the core network such as an S1 or NG interface.

The radio transceiver 14-10 may transmit and receive a signal to and from another network entity. The radio transceiver 14-10 may transmit and receive, for example, a signal to and from the UE or transmit a signal including a message such as RRC Release for controlling the operation of the UE.

Another BS/core network transceiver 14-20 may transmit and receive a signal to and from another network entity. For example, SDT UL/DL data exchanged with the UPF may be transmitted and received.

The controller 14-30 may control the overall operation of the BS according to an embodiment proposed in the disclosure. For example, the controller 14-30 may control the signal flow between respective blocks to perform the operation according to the flowchart described above.

The storage unit 14-40 may store at least one piece of information transmitted and received through the radio transceiver 14-10 and another BS/core network transceiver 14-20 and information generated through the controller 14-30. For example, the storage unit 14-40 may store UL data heading for the UPF.

In the above-described detailed embodiments of the disclosure, an element included in the disclosure is expressed in the singular or the plural according to presented detailed embodiments. However, the singular form or plural form is selected appropriately to the presented situation for the convenience of description, and the disclosure is not limited by elements expressed in the singular or the plural. Therefore, either an element expressed in the plural may also include a single element or an element expressed in the singular may also include multiple elements.

The embodiments of the disclosure described and shown in the specification and the drawings are merely specific examples that have been presented to easily explain the technical contents of the disclosure and help understanding of the disclosure, and are not intended to limit the scope of the disclosure. That is, it will be apparent to those skilled in the art that other variants based on the technical idea of the disclosure may be implemented. In addition, the above respective embodiments may be employed in combination, as necessary. For example, a part of an embodiment of the disclosure may be combined with a part of another embodiment of the disclosure. Furthermore, other variants based on the technical idea of the above-described embodiments may also be implemented in other systems such as LTE, 5G, or NR systems.

## Claims

1. A method of a base station (BS) in a wireless communication system, the method comprising:
receiving a radio resource control (RRC) message comprising uplink data from a user equipment (UE) in an inactive mode by a distributed unit (DU) of the BS;
transferring a first message comprising at least one piece of indicator information related to transmission of the uplink data and an identification information of a data radio bearer (DRB) corresponding to the uplink data to a centralized unit-control plane (CU-CP) of the BS by the DU; and
transmitting the uplink data to a user plane function (UPF), based on the first message.

2. The method of claim 1, wherein the transmitting of the uplink data to the UPF comprises:
transferring a second message comprising address information related to uplink transmission for a centralized unit-user plane (CU-UP) of the BS to the DU by the CU-CP, based on the first message;
transferring the uplink data to the CU-UP by the DU, based on the address information related to the uplink transmission for the CU-UP; and
transmitting the uplink data to the UPF by the CU-UP.

3. The method of claim 2, further comprising:
transferring a third message comprising address information related to downlink transmission for the DU to the CU-CP by the DU in response to the second message;
transferring a fourth message comprising the address information related to the downlink transmission for the DU to the CU-UP by the CU-CP, based on the third message;
receiving downlink data for the UE from the UPF by the CU-CP;
transferring the downlink data to the DU by the CU-UP, based on the address information related to the downlink transmission for the DU; and
transmitting an RRC message comprising the downlink data to the UE by the DU.

4. The method of claim 1, wherein the first message further comprises the uplink data, and
wherein the transmitting of the uplink data to the UPF comprises:
transferring a fifth message comprising the uplink data and the identification information of the DRB to the CU-UP by the CU-CP; and
transmitting the uplink data to the UPF by the CU-UP, based on the fifth message.

5. The method of claim 4, further comprising:
receiving downlink data for the UE from the UPF by the CU-UP;
transferring a sixth message comprising the downlink data and the identification information of the DRB to the CU-CP by the CU-UP;
transferring a seventh message comprising the downlink data and the identification information of the DRB to the DU by the CU-CP, based on the sixth message; and
transmitting an RRC message comprising the downlink data to the UE by the DU, based on the identification information of the DRB.

6. The method of claim 4, further comprising:
transferring an eighth message comprising address information related to downlink transmission for the DU to the CU-CP by the DU;
transferring a ninth message comprising the address information related to the downlink transmission for the DU to the CU-UP by the CU-CP, based on the eighth message;
receiving downlink data for the UE from the UPF, by the CU-UP;
transferring the downlink data to the DU by the CU-UP, based on the address information related to the downlink transmission for the DU; and
transmitting an RRC message comprising the downlink data to the UE by the DU.

7. The method of claim 1, wherein the uplink data has a size allowed to be included in one transport block (TB).

8. A base station (BS) in a wireless communication system, the BS comprising:
a transceiver; and
a controller configured to control the transceiver to:
receive a radio resource control (RRC) message comprising uplink data from a user equipment (UE) in an inactive mode by a distributed unit (DU) of the BS;
transfer a first message comprising at least one piece of indicator information related to transmission of the uplink data and an identification information of a data radio bearer (DRB) corresponding to the uplink data to a centralized unit-control plane (CU-CP) of the BS by the DU; and
transmit the uplink data to a user plane function (UPF), based on the first message.

9. The BS of claim 8, wherein the controller is configured to control the transceiver to:
transfer a second message comprising address information related to uplink transmission for a centralized unit-user plane (CU-UP) of the BS to the DU by the CU-CP, based on the first message;
transfer the uplink data to the CU-UP by the DU, based on the address information related to the uplink transmission for the CU-UP; and
transmit the uplink data to the UPF by the CU-UP.

10. The BS of claim 9, wherein the controller is configured to control the transceiver to:
transfer a third message comprising address information related to downlink transmission for the DU to the CU-CP by the DU in response to the second message;
transfer a fourth message comprising the address information related to the downlink transmission for the DU to the CU-UP by the CU-CP, based on the third message;
receive downlink data for the UE from the UPF by the CU-UP;
transfer the downlink data to the DU by the CU-UP, based on the address information related to the downlink transmission for the DU; and
transmit an RRC message comprising the downlink data to the UE by the DU.

11. The BS of claim 8, wherein the first message further comprises the uplink data, and
wherein the controller is configured to control the transceiver to:
transfer a fifth message comprising the uplink data and the identification information of the DRB to the CU-UP by the CU-CP, based on the first message; and
transmit the uplink data to the UPF by the CU-UP, based on the fifth message.

12. The BS of claim 11, wherein the controller is configured to transceiver to:
receive downlink data for the UE from the UPF by the CU-UP;
transfer a sixth message comprising the downlink data and the identification information of the DRB to the CU-CP by the CU-UP;
transfer a seventh message comprising the downlink data and the identification information of the DRB to the DU by the CU-CP, based on the sixth message; and
transmit an RRC message comprising the downlink data to the UE by the DU, based on the identification information of the DRB.

13. The BS of claim 11, wherein the controller is configured to control the transceiver to:
transfer an eighth message comprising address information related to downlink transmission for the DU to the CU-CP by the DU; and
transfer a ninth message comprising the address information related to the downlink transmission for the DU to the CU-UP by the CU-CP, based on the eighth message.

14. The BS of claim 13, wherein the controller is configured to control the transceiver to:
receive downlink data for the UE from the UPF, by the CU-UP;
transfer the downlink data to the DU by the CU-UP, based on the address information related to the downlink transmission for the DU; and
transmit an RRC message comprising the downlink data to the UE by the DU.

15. The BS of claim 8, wherein the uplink data has a size allowed to be included in one transport block (TB).
